# EUROPEAN PATENT APPLICATION

(11) **EP 4 404 623 A1**
(43) Date of publication of application: **24.07.2024**
(21) Application number: 22874842.2
(22) Date of filing: 26.09.2022
(51) Int. Cl.: H04W 36/00

(54) **COMMUNICATION PATH SWITCHING METHOD AND APPARATUS, FIRST TERMINAL AND SECOND TERMINAL**

(30) Priority: 28.09.2021 CN 202111146285
(71) Applicant: Vivo Mobile Communication Co., Ltd., Dongguan, Guangdong 523863 (CN)
(72) Inventor: WANG, Wen, Dongguan, Guangdong 523863 (CN); XIE, Zhenhua, Dongguan, Guangdong 523863 (CN); ZHENG, Qian, Dongguan, Guangdong 523863 (CN)
(74) Representative: Murgitroyd & Company
(86) International application number: PCT/CN2022/121323
(87) International publication number: WO 2023/051457

(57) **Abstract**

This application discloses a communication path switching method and apparatus, a first terminal, and a second terminal, and pertains to the field of communication technologies. The communication path switching method in embodiments of this application includes: performing, by a first terminal, switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

## Description

### CROSS-REFERENCE TO RELATED APPLICATION

This application claims priority to Chinese Patent Application No. 202111146285.6, filed on September 28, 2021, and entitled "COMMUNICATION PATH SWITCHING METHOD AND APPARATUS, FIRST TERMINAL, AND SECOND TERMINAL", which is incorporated herein by reference in its entirety.

### TECHNICAL FIELD

This application pertains to the field of communication technologies, and specifically relates to a communication path switching method and apparatus, a first terminal, and a second terminal.

### BACKGROUND

Proximity communication implements direct communication between user equipments at a specific distance, and direct communication between user equipments means sending data from one user equipment to another user equipment without going through a cellular network. The user equipments performing proximity communication are dispersed throughout the network, and each user equipment is capable of transmitting and receiving signals and has an automatic routing (forwarding of messages) function. In a proximity communication network, the user equipment acts as both a server and a client, and the users are aware of each other's presence and self-organize to form a virtual or physical group.

In the prior art, user equipments performing direct PC5 communication may not be able to continue proximity communication due to mobility and have to consider switching services to direct communication over a universal user network interface (Uu) (that is, a cellular network) to continue communication, or when the cellular network is overloaded or the cellular network coverage is lost or quality of service (Quality of Service, QoS) requirements of the service are not meet, and proximity communication is met between the user equipments, switching between a direct PC5 communication path and a direct Uu communication path needs to be performed.

However, how a trigger condition and occasion for switching between the PC5 communication path and the direct Uu communication path are determined is an urgent problem to be resolved.

### SUMMARY

Embodiments of this application provide a communication path switching method and apparatus, a first terminal, and a second terminal, so as to resolve the problem of determining a trigger condition and occasion for switching between a PC5 communication path and a direct Uu communication path.

According to a first aspect, a communication path switching method is provided, applied to the first terminal, where the method includes:
performing, by a first terminal, switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a second aspect, a communication path switching method is provided, applied to a second terminal, where the method includes:
performing, by a second terminal, switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a third aspect, a communication path switching apparatus is provided, applied to a first terminal and including:
a first switching module, configured to perform switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a fourth aspect, a communication path switching apparatus is provided, applied to a second terminal and including:
a second switching module, configured to perform switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a fifth aspect, a first terminal is provided, where the first terminal includes a processor, a memory, and a program or instructions stored in the memory and executable on the processor, and when the program or the instructions are executed by the processor, the steps of the communication path switching method according to the first aspect are implemented.

According to a sixth aspect, a first terminal is provided, including a processor and a communication interface, where the processor is configured to perform switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a seventh aspect, a second terminal is provided, where the second terminal includes a processor, a memory, and a program or instructions stored in the memory and executable on the processor, and when the program or the instructions are executed by the processor, the steps of the communication path switching method according to the second aspect are implemented.

According to an eighth aspect, a second terminal is provided, including a processor and a communication interface, where the processor is configured to perform switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

According to a ninth aspect, a readable storage medium is provided, where a program or instructions are stored in the readable storage medium, and when the program or the instructions are executed by a processor, the steps of the communication path switching method according to the first aspect are implemented, or the steps of the communication path switching method according to the second aspect are implemented.

According to a tenth aspect, a chip is provided, where the chip includes a processor and a communication interface, the communication interface is coupled to the processor, and the processor is configured to execute a program or instructions to implement the steps of the communication path switching method according to the first aspect or implement the steps of the communication path switching method according to the second aspect.

According to an eleventh aspect, a computer program/program product is provided, where the computer program/program product is stored in a non-transitory storage medium, and the program/program product is executed by at least one processor to implement the steps of the communication path switching method according to the first aspect or the steps of the communication path switching method according to the second aspect.

In the embodiments of this application, the first terminal performs switching between the first communication path and the second communication path based on the path switching indication information, so that the first terminal and the second terminal can obtain, based on the same path switching indication information, consistent understanding on the trigger condition and occasion for switching between the first communication path and the second communication path, thereby implementing synchronized path switching between direct communication and wireless communication. This can ensure continuity of services between the first terminal and the second terminal, and improve quality of service for the services.

### BRIEF DESCRIPTION OF DRAWINGS

FIG. 1 is a structural diagram of a wireless communication system to which the embodiments of this application are applicable;
FIG. 2 is a first schematic flowchart of a communication path switching method according to an embodiment of this application;
FIG. 3 is a second schematic flowchart of a communication path switching method according to an embodiment of this application;
FIG. 4 is a schematic signaling flowchart of a negotiation procedure initiated by a first terminal according to an embodiment of this application;
FIG. 5 is a schematic signaling flowchart of a path switching cancellation procedure initiated by a first terminal according to an embodiment of this application;
FIG. 6 is a first schematic structural diagram of a communication path switching apparatus according to an embodiment of this application;
FIG. 7 is a second schematic structural diagram of a communication path switching apparatus according to an embodiment of this application;
FIG. 8 is a first schematic structural diagram of a first terminal according to an embodiment of this application;
FIG. 9 is a second schematic structural diagram of a first terminal according to an embodiment of this application; and
FIG. 10 is a schematic structural diagram of a second terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the terms used in this way is interchangeable in appropriate circumstances so that the embodiments of this application can be implemented in other orders than the order illustrated or described herein, and "first" and "second" are usually for distinguishing same-type objects but not limiting the number of objects, for example, there may be one or more first objects. In addition, "and/or" in this specification and claims indicates at least one of connected objects, and the symbol "/" generally indicates that the associated objects are in an "or" relationship.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. In the following descriptions, a new radio (New Radio, NR) system is described for an illustration purpose, and NR terms are used in most of the following descriptions, although these technologies may also be applied to other applications than an NR system application, for example, the 6-th generation (6-th Generation, 6G) communication system.

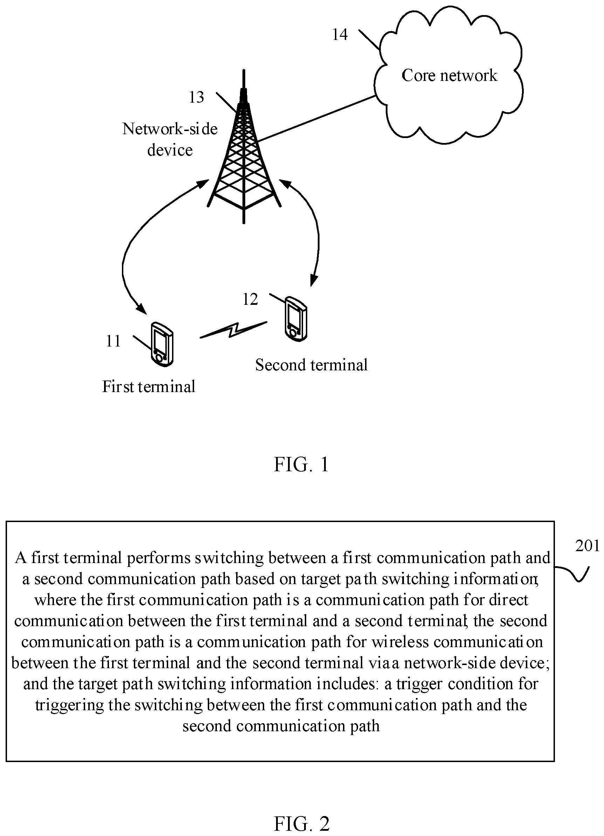

FIG. 1 is a structural diagram of a wireless communication system to which the embodiments of this application are applicable. As shown in FIG. 1, the wireless communication system includes: a first terminal 11, a second terminal 12, a network-side device 13, and a core network 14; where the first terminal 11 and the second terminal 12 may perform wireless communication with each other via the network-side device 13, for example, the first terminal 11 and the second terminal 12 each establish a wireless connection to the network-side device 13 based on a Uu interface to implement communication through the network-side device 13. The first terminal 11 and the second terminal 12 may alternatively perform direct communication, for example, the first terminal 11 and the second terminal 12 perform direct PC5 communication based on a PC5 interface without using a cellular network.

The first terminal 11 and the second terminal 12 may also be referred to as terminal devices or user equipments (User Equipment, UE), and the first terminal 11 and the second terminal 12 each may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), and a smart home device (a home device with wireless communication function, such as refrigerator, TV, washing machine, or furniture). The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, game console, and the like. It should be noted that a specific type of the first terminal 11 and the second terminal 12 is not limited in the embodiments of this application. The network-side device 13 may be a base station. The base station may be referred to as an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmission and reception Point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a communication path switching method provided in the embodiments of this application by using some embodiments and application scenarios thereof with reference to the accompanying drawings.

Embodiments of this application provide a communication path switching method, and the communication path switching method can be applied in a direct communication scenario, where a first terminal supporting direct communication performs switching between a first communication path and a second communication path based on target path switching information, so that the first terminal and a second terminal can obtain, based on same path switching indication information, consistent understanding on a trigger condition and occasion for switching between the first communication path and the second communication path, thereby implementing synchronized path switching between direct communication and wireless communication. This can ensure continuity of services between the first terminal and the second terminal, and improve quality of service for the services.

FIG. 2 is a first schematic flowchart of a communication path switching method according to an embodiment of this application. As shown in FIG. 2, the method includes the following step.

Step 201: A first terminal performs switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

Optionally, this embodiment of this application may be applied in a direct communication scenario. The direct communication may include, but is not limited to, at least one of the following: proximity-based services (Proximity-based Services, ProSe) and vehicle-to-everything (Vehicle-to-Everything, V2X). The first communication path may include a direct PC5 communication path; and the second communication path may include a direct Uu communication path. The first terminal and the second terminal may include, but are not limited to, the types of first terminal 11 and second terminal 12 listed above. The network-side device may include but is not limited to the type of the network-side device 13 listed above.

Optionally, the target path switching information includes: a trigger condition; where the trigger condition is used to trigger switching between the first communication path and the second communication path.

In the communication path switching method provided in this embodiment of this application, the first terminal performs switching between the first communication path and the second communication path based on the path switching indication information, so that the first terminal and the second terminal can obtain, based on the same path switching indication information, consistent understanding on the trigger condition and occasion for switching between the first communication path and the second communication path, thereby implementing synchronized path switching between direct communication and wireless communication. This can ensure continuity of services between the first terminal and the second terminal, and improve quality of service for the services.

Optionally, the performing, by a first terminal, switching between a first communication path and a second communication path based on target path switching information includes: performing, by the first terminal, switching from the first communication path to the second communication path based on the target path switching information in a case that a current communication path is the first communication path; or performing, by the first terminal, switching from the second communication path to the first communication path based on the target path switching information in a case that the current communication path is the second communication path.

Using the first communication path being a direct PC5 communication path and the second communication path being a direct Uu communication path as an example, switching between the direct PC5 communication path and the direct Uu communication path includes: switching from the direct PC5 communication path to the direct Uu communication path in a case that the current communication path is the direct PC5 communication path; or switching from the direct Uu communication path to the direct PC5 communication path in a case that the current communication path is the Uu communication path.

Optionally, the target path switching information may include, in addition to the trigger condition, at least one of the following information: a first path switching indication, a second path switching indication, a third path switching indication, a fourth path switching indication, and a path switching direction.

The first path switching indication is used for indicating to perform switching between the first communication path and the second communication path for at least one of all services, all sessions, and all QoS flows on a current communication path between the first terminal and the second terminal in a case that the trigger condition is met.

The second path switching indication includes a first service type and/or a first session type and is used for indicating to perform switching between the first communication path and the second communication path for a service corresponding to the first service type and/or a session corresponding to the first session type on the current communication path, or for all services and/or all sessions on the current communication path in a case that the trigger condition is met.

Optionally, the second path switching indication may be used to indicate to perform switching between the first communication path and the second communication path for the service corresponding to the first service type and/or the session corresponding to the first session type on the current communication path in a case that the trigger condition is met; or
the second path switching indication may be used to indicate to perform switching between the first communication path and the second communication path for all the services and/or all the sessions on the current communication path in a case that the trigger condition is met.

Optionally, the first service type may include at least one of the following: a high priority type, an emergency type, and a public safety type. The first session type may include at least one of the following: a high priority type, an emergency type, and a public safety type.

The third path switching indication includes a first service identifier and/or a first session identifier and is used for indicating to perform switching between the first communication path and the second communication path for a service corresponding to the first service identifier and/or a session corresponding to the first session identifier on the current communication path, or for all services and/or all sessions on the current communication path in a case that the trigger condition is met.

Optionally, the third path switching indication may be used to indicate to perform switching between the first communication path and the second communication path for the service corresponding to the first service identifier and/or the session corresponding to the first session identifier on the current communication path in a case that the trigger condition is met; or
the third path switching indication may be used to indicate to perform switching between the first communication path and the second communication path for all the services and/or all the sessions on the current communication path in a case that the trigger condition is met.

Optionally, the service identifier may include at least one of the following: a ProSe identifier (ID), an application (Application) ID, a Prose type, and a V2X service type. The session identifier may include: a protocol data unit (Protocol Data Unit, PDU) session (session) ID.

The fourth path switching indication includes a first QoS flow identifier and is used for indicating to perform switching between the first communication path and the second communication path for a QoS flow corresponding to the first QoS flow identifier on the current communication path, or for all services and/or all sessions on the current communication path in a case that the trigger condition is met.

Optionally, the fourth path switching indication may be used to indicate to perform switching between the first communication path and the second communication path for the QoS flow corresponding to the first QoS flow identifier on the current communication path in a case that the trigger condition is met; or
the fourth path switching indication may be used to indicate to perform switching between the first communication path and the second communication path for all the services and/or all the sessions on the current communication path in a case that the trigger condition is met.

The path switching direction is used for indicating a switching direction of a communication path.

Optionally, the switching direction of the communication path may include at least one of the following: switching from the direct PC5 communication path to the direct Uu communication path; and switching from the direct Uu communication path to the direct PC5 communication path.

Optionally, the trigger condition may include, but is not limited to, at least one of the following information:
a first QoS threshold and/or first communication interruption information, a second QoS threshold and/or second communication interruption information, a third QoS threshold and/or third communication interruption information, a fourth QoS threshold and/or fourth communication interruption information, and a fifth QoS threshold and a reference signal received power (Reference Signal Receiving Power, RSRP) threshold.
1) The first QoS threshold and the first communication interruption information are associated with the current communication path between the first terminal and the second terminal, and the first QoS threshold is a threshold of a QoS parameter for the current communication path.

Optionally, based on the first QoS threshold, execution of switching between the first communication path and the second communication path is triggered for each service and/or each session on the current communication path in a case the QoS parameter on the current communication path does not meet the first QoS threshold.

Optionally, based on the first communication interruption information, execution of switching between the first communication path and the second communication path is triggered in a case that the current communication path is interrupted; where the execution of switching between the first communication path and the second communication path includes at least one of the following:
performing switching between the first communication path and the second communication path for all the services and/or all the sessions on the current communication path; and
performing switching between the first communication path and the second communication path for services and sessions associated with interruption on the current communication path.

2) The second QoS threshold and the second communication interruption information are associated with the first service type and/or the first session type, and the second QoS threshold is a threshold of a QoS parameter for the service corresponding to the first service type and/or the session corresponding to the first session type on the current communication path.

Optionally, based on the second QoS threshold, execution of switching between the first communication path and the second communication path is triggered in a case that a QoS parameter for the service corresponding to the first service type and/or the session corresponding to the first session type on the current communication path does not meet the second QoS threshold; where the execution of switching between the first communication path and the second communication path includes at least one of the following:
switching between the first communication path and the second communication path for the service corresponding to the first service type and/or the session corresponding to the first session type on the current communication path; and
switching between the first communication path and the second communication path for all the services and/or all the sessions on the current communication path.

Optionally, based on the second communication interruption information, execution of switching between the first communication path and the second communication path is triggered in a case that the current communication path is interrupted; where the execution of switching between the first communication path and the second communication path includes at least one of the following:
switching between the first communication path and the second communication path for the service corresponding to the first service type and/or the session corresponding to the first session type on the current communication path; and
switching between the first communication path and the second communication path for all the services and/or all the sessions on the current communication path.

3) The third QoS threshold and/or the third communication interruption information are associated with the first service identifier and/or the first session identifier, and the third QoS threshold is a threshold of a QoS parameter for the service corresponding to the first service identifier and/or the session corresponding to the first session identifier on the current communication path.

Optionally, based on the third QoS threshold, execution of switching between the first communication path and the second communication path is triggered in a case that a QoS parameter for the service corresponding to the first service identifier and/or the session corresponding to the first session identifier on the current communication path does not meet the third QoS threshold; where the execution of switching between the first communication path and the second communication path includes at least one of the following:
switching between the first communication path and the second communication path for the service corresponding to the first service identifier and/or the session corresponding to the first session identifier on the current communication path; and
switching between the first communication path and the second communication path for all the services and/or all the sessions on the current communication path.

Optionally, based on the third communication interruption information, execution of switching between the first communication path and the second communication path is triggered in a case that the current communication path is interrupted; where the execution of switching between the first communication path and the second communication path includes at least one of the following:
switching between the first communication path and the second communication path for the service corresponding to the first service identifier and/or the session corresponding to the first session identifier on the current communication path; and
switching between the first communication path and the second communication path for all the services and/or all the sessions on the current communication path.

4) The fourth QoS threshold and the fourth communication interruption information are associated with the first QoS flow identifier, and the fourth QoS threshold is a threshold of a QoS parameter for the QoS flow corresponding to the first QoS flow identifier on the current communication path.

Optionally, based on the fourth QoS threshold, execution of switching between the first communication path and the second communication path is triggered in a case that a QoS parameter for the QoS flow corresponding to the first QoS flow identifier on the current communication path does not meet the fourth QoS threshold; where the execution of switching between the first communication path and the second communication path includes at least one of the following:
switching between the first communication path and the second communication path for the QoS flow corresponding to the first QoS flow identifier on the current communication path; and
switching between the first communication path and the second communication path for all the services and/or all the sessions on the current communication path.

Optionally, based on the fourth communication interruption information, execution of switching between the first communication path and the second communication path is triggered in a case that the current communication path is interrupted; where the execution of switching between the first communication path and the second communication path includes at least one of the following:
switching between the first communication path and the second communication path for the QoS flow corresponding to the first QoS flow identifier on the current communication path; and
switching between the first communication path and the second communication path for all the services and/or all the sessions on the current communication path.

5) For the fifth QoS threshold and the RSRP threshold, the current communication path is the first communication path, the fifth QoS threshold is a threshold of a QoS parameter for the first communication path, and the RSRP threshold is a threshold of an RSRP for the second communication path.

Optionally, based on the fifth QoS threshold and RSRP threshold, execution of switching from the first communication path to the second communication path is triggered in a case that the current communication path is the first communication path, the QoS parameter for the first communication path does not meet the fifth QoS threshold, and the RSRP on the second communication path is greater than the RSRP threshold.

Optionally, an implementation of performing switching between the first communication path and the second communication path based on the target path switching information by the first terminal may include at least one of the following:
1) In a case that the target path switching information includes the first path switching indication, the first QoS threshold, and/or first communication interruption information, the first terminal performs switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
2) In a case that the target path switching information includes the second path switching indication, the second QoS threshold, and/or the second communication interruption information, the first terminal performs switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or
   the first terminal performs switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold.
3) In a case that the target path switching information includes the third path switching indication, the third QoS threshold, and/or the third communication interruption information, the first terminal performs switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or
   the first terminal performs switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold.
4) In a case that the target path switching information includes the fourth path switching indication, the fourth QoS threshold, and/or the fourth communication interruption information, the first terminal performs switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or
   the first terminal performs switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold.
5) In a case that the target path switching information includes the fifth QoS threshold and the RSRP threshold, the first terminal performs switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

Optionally, the QoS parameter may include, but is not limited to, at least one of the following: delay, packet error rate, guaranteed stream bit rate, and maximum stream bit rate.

Optionally, the first terminal first obtains the target path switching information, and then performs switching between the first communication path and the second communication path based on the target path switching information. Specifically, an implementation of obtaining the target path switching information by the first terminal may include at least one of the following obtaining manners: being preconfigured, being pre-specified by a protocol, being configured by the network-side device (for example, the first terminal receives the target path switching information sent by the network-side device), the target path switching information being determined by the first terminal and the second terminal through negotiation, and the target path switching information being sent by other terminals. The following describes the obtaining manners as follows:

The target path switching information being sent by other terminals may include: the first terminal receives the target path switching information sent by the second terminal;
for example, the second terminal sends the target path switching information to the first terminal via direct PC5 communication and/or direct Uu communication; or
the second terminal carries the target path switching information in a discovery message; where after the discovery message is received, in a case that the first terminal accepts switching between the first communication path and the second communication path and a trigger condition is accepted, the first terminal determines the trigger condition to be a path switching condition, and performs switching between the first communication path and the second communication path based on the target path switching information.

Optionally, an implementation of determining the target path switching information through negotiation by the first terminal and the second terminal may include: a negotiation procedure initiated by the first terminal, or a negotiation procedure initiated by the second terminal. It should be noted that the negotiation procedure may be performed during establishment of the first communication path or updating of the first communication path; and the first communication path may include a PC5 communication link.

The negotiation procedure initiated by the first terminal is described as follows:
1) The first terminal sends first path switching information to the second terminal; where the first path switching information includes a trigger condition accepted by the first terminal for triggering switching between the first communication path and the second communication path. Optionally, the first path switching information includes at least one of the following: a first path switching indication, a second path switching indication, a third path switching indication, a fourth path switching indication, a path switching direction, a first QoS threshold and/or first communication interruption information, a second QoS threshold and/or second communication interruption information, a third QoS threshold and/or third communication interruption information, a fourth QoS threshold and/or fourth communication interruption information, and a fifth QoS threshold and RSRP threshold.
2) After the second terminal receives the first path switching information sent by the first terminal, in a case that the second terminal accepts switching between the first communication path and the second communication path, the second terminal determines the target path switching information based on the first path switching information, and then sends the target path switching information to the first terminal; where the target path switching information is information that can be accepted by the second terminal from the first path switching information. The first terminal receives the target path switching information sent by the second terminal; and the first terminal and the second terminal perform switching between the first communication path and the second communication path based on the target path switching information. It should be noted that the target path switching information may be a subset of the first path switching information. Optionally, if the target path switching information is a higher requirement than a requirement of the first path switching information, after receiving the target path switching information sent by the second terminal, the first terminal determines information that can be accepted by the first terminal in the target path switching information as updated target path switching information and informs the second terminal of the information. The first terminal and the second terminal perform switching between the first communication path and the second communication path based on the updated target path switching information.

Alternatively, after the second terminal receives the first path switching information sent by the first terminal, in a case that the second terminal does not accept switching between the first communication path and the second communication path or does not accept the first path switching information, the second terminal sends first switching reject information to the first terminal, the first switching reject information being used to indicate that the second terminal does not accept switching between the first communication path and the second communication path or does not accept the first path switching information; and the first terminal does not perform switching between the first communication path and the second communication path after receiving the first switching reject information sent by the second terminal.

It should be noted that negotiation messages involved in the negotiation procedure may be independent PC5 signaling, or may be existing PC5 signaling.

The negotiation procedure initiated by the second terminal is described as follows:
the second terminal sends second path switching information to the first terminal; where the second path switching information includes a trigger condition accepted by the second terminal for triggering switching between the first communication path and the second communication path.

After the first terminal receives the second path switching information sent by the second terminal, the first terminal determines the target path switching information based on the second path switching information; where the target path switching information is information accepted by the first terminal in the second path switching information; and the first terminal sends the target path switching information to the second terminal. The second terminal receives the target path switching information sent by the first terminal.

Alternatively, after the first terminal receives the second path switching information sent by the second terminal, in a case that the first terminal does not accept switching between the first communication path and the second communication path or does not accept the second path switching information, the first terminal sends second switching reject information to the second terminal, the second switching reject information being used to indicate that the first terminal does not accept switching between the first communication path and the second communication path or does not accept the second path switching information; and the second terminal does not perform switching between the first communication path and the second communication path after receiving the second switching reject information sent by the first terminal. It should be noted that negotiation messages involved in the negotiation procedure may be independent PC5 signaling, or may be existing PC5 signaling.

Optionally, after obtaining the target path switching information, the first terminal performs the following procedure when the first terminal is unable to perform switching between the first communication path and the second communication path:
1) the first terminal sends first path switching cancellation information to the second terminal; where the first path switching cancellation information is used to indicate the second terminal to skip switching between the first communication path and the second communication path;
2) the second terminal receives the first path switching cancellation information sent by the first terminal; the second terminal does not perform switching between the first communication path and the second communication path based on the first path switching cancellation information; and the second terminal sends first path switching cancellation reply information to the first terminal; and
3) the first terminal receives first path switching cancellation reply information sent by the second terminal.

Optionally, the first path switching cancellation information includes at least one of the following cause values: congestion control information, mobility restriction information, and not being within a cellular signal coverage.

Optionally, the first path switching cancellation information includes:
trigger condition deactivation information; where the trigger condition deactivation information includes a deactivation cause value for indicating the second terminal to deactivate the trigger condition; where the deactivation cause value includes at least one of the following cause values: congestion control information, mobility restriction information, and not being within a cellular signal coverage; or
path switching termination information, where the path switching termination information is used for indicating the second terminal to terminate switching between the first communication path and the second communication path.

Optionally, after the second terminal deactivates the trigger condition, the second terminal cancels execution of switching between the first communication path and the second communication path in a case that the trigger condition is met.

Optionally, in a case that the deactivation cause value includes the congestion control information, the trigger condition deactivation information may further include a timer. Specifically, after receiving the trigger condition deactivation information, the second terminal activates the timer; and before the timer reaches a target duration, in a case that the trigger condition is met, the second terminal does not perform switching between the first communication path and the second communication path. After the timer reaches the target duration, the second terminal reactivates the trigger condition, that is, in a case that the trigger condition is met, the second terminal performs switching between the first communication path and the second communication path.

Optionally, after the first terminal receives first path switching cancellation reply information sent by the second terminal, the first terminal deletes the target path switching information in a case the first path switching cancellation information includes the path switching termination information; or
the first terminal deactivates the trigger condition in a case that the first path switching cancellation information includes the trigger condition deactivation information, that is, in a case that the trigger condition is met, the first terminal cancels execution of switching between the first communication path and the second communication path.

Optionally, after the first terminal deactivates the trigger condition in a case that the first path switching cancellation information includes the trigger condition deactivation information, and in a case of resuming execution of switching between the first communication path and the second communication path, the first terminal sends first trigger condition activation information to the second terminal; where the first trigger condition activation information is used to indicate the second terminal to activate the trigger condition. After receiving the first trigger condition activation information, the second terminal activates the trigger condition based on the first trigger condition activation information. Optionally, the second terminal sends first trigger condition activation reply information to the first terminal, where the first trigger condition activation reply information is used for indicating that the second terminal has activated the trigger condition; and the first terminal receives the first trigger condition activation reply information.

Optionally, after obtaining the target path switching information, the first terminal sends second trigger condition activation information to the second terminal; where the second trigger condition activation information is used to indicate the second terminal to activate the trigger condition. After receiving the second trigger condition activation information, the second terminal activates the trigger condition based on the second trigger condition activation information.

Optionally, after obtaining the target path switching information, the first terminal sends second trigger condition activation information to the second terminal; where the second trigger condition activation information is used to indicate the second terminal to activate the trigger condition. After receiving the second trigger condition activation information, the second terminal activates the trigger condition based on the second trigger condition activation information; and the second terminal sends second trigger condition activation reply information to the first terminal; where the second trigger condition activation reply information is used to indicate that the second terminal has activated the trigger condition. After receiving the second trigger condition activation reply information, the first terminal activates the trigger condition based on the second trigger condition activation reply information.

Optionally, after the second terminal obtains the target path switching information, the second terminal performs the following process in a case that the second terminal is unable to perform switching between the first communication path and the second communication path:
1) the second terminal sends second path switching cancellation information to the first terminal; where the second path switching cancellation information is used to indicate the first terminal to skip switching between the first communication path and the second communication path;
2) the first terminal receives the second path switching cancellation information sent by the second terminal; the first terminal does not perform switching between the first communication path and the second communication path, based on the second path switching cancellation information; and the first terminal sends second path switching cancellation reply information to the second terminal; and
3) the second terminal receives the second path switching cancellation reply information sent by the first terminal.

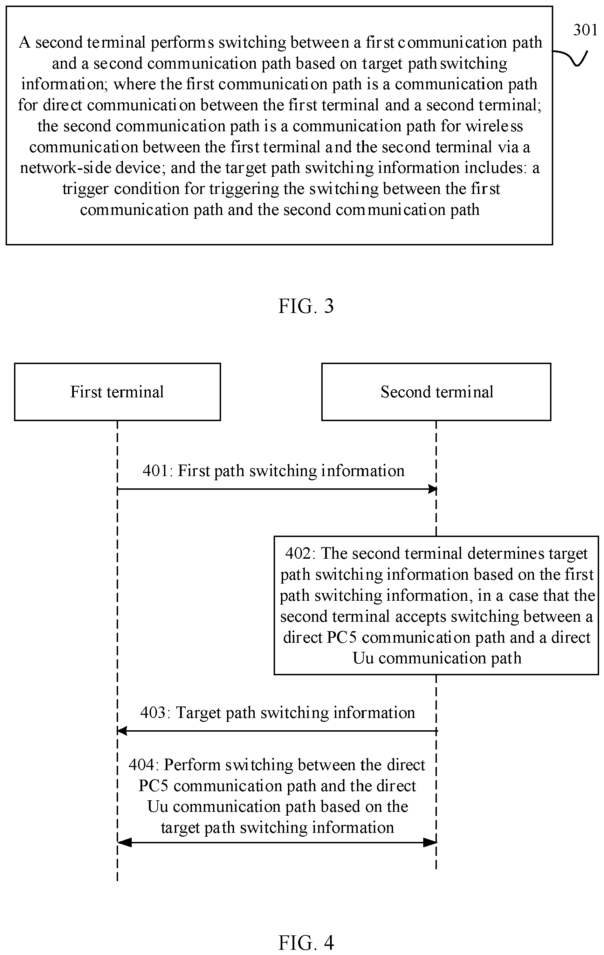

FIG. 3 is a second schematic flowchart of a communication path switching method according to an embodiment of this application. As shown in FIG. 3, the method includes the following step.

Step 301: A second terminal performs switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

Optionally, this embodiment of this application may be applied in a direct communication scenario; and the direct communication may include, but is not limited to, at least one of the following: ProSe and V2X. The first communication path may include a direct PC5 communication path; and the second communication path may include a direct Uu communication path. The first terminal and the second terminal may include, but are not limited to, the types of the first terminal 11 and second terminal 12 listed above. The network-side device may include but is not limited to the type of the network-side device 13 listed above.

In the communication path switching method provided in this embodiment of this application, the second terminal performs switching between the first communication path and the second communication path based on the path switching indication information, so that the first terminal and the second terminal can obtain, based on the same path switching indication information, consistent understanding on the trigger condition and occasion for switching between the first communication path and the second communication path, thereby implementing synchronized path switching between direct communication and wireless communication. This can ensure continuity of services between the first terminal and the second terminal, and improve quality of service for the services.

Optionally, the second terminal first obtains the target path switching information, and then performs switching between the first communication path and the second communication path based on the target path switching information. Specifically, an implementation of obtaining the target path switching information by the second terminal may include at least one of the following obtaining manners: being preconfigured, being pre-specified by a protocol, being configured by the network-side device (for example, the second terminal receives the target path switching information sent by the network-side device), the target path switching information being determined by the first terminal and the second terminal through negotiation, and the target path switching information being sent by other terminals. The following describes the obtaining manners as follows:

The target path switching information being sent by other terminals may include: the second terminal receives the target path switching information sent by the first terminal;
for example, the first terminal sends the target path switching information to the second terminal via direct PC5 communication and/or direct Uu communication; or
the first terminal carries the target path switching information in a discovery message; where after the discovery message is received, in a case that the second terminal accepts switching between the first communication path and the second communication path and a trigger condition is accepted, the second terminal determines the trigger condition to be a path switching condition, and performs switching between the first communication path and the second communication path based on the target path switching information.

Optionally, an implementation of determining the target path switching information through negotiation by the first terminal and the second terminal may include: a negotiation procedure initiated by the first terminal, or a negotiation procedure initiated by the second terminal. It should be noted that the negotiation procedure may be performed during establishment of the first communication path or updating of the first communication path; and the first communication path may include a PC5 communication link.

Optionally, the negotiation procedure initiated by the first terminal is described as follows:
That the second terminal obtains the target path switching information includes: the second terminal receives the first path switching information sent by the first terminal, where the first path switching information includes a trigger condition that is used for triggering switching between the first communication path and the second communication path and that is accepted by the first terminal; the second terminal determines the target path switching information based on the first path switching information, where the target path switching information is information accepted by the second terminal from the first path switching information; and the second terminal sends the target path switching information to the first terminal.

It should be noted that negotiation messages involved in the negotiation procedure may be independent PC5 signaling, or may be existing PC5 signaling.

Optionally, the negotiation procedure initiated by the second terminal is described as follows:
That the second terminal obtains the target path switching information includes: the second terminal sends second path switching information to the first terminal, where the second path switching information includes a trigger condition that is used for triggering switching between the first communication path and the second communication path and that is accepted by the second terminal; and the second terminal receives the target path switching information sent by the first terminal, where the target path switching information is information accepted by the first terminal in the second path switching information.

It should be noted that for description and explanation of the negotiation procedure initiated by the first terminal and the negotiation procedure initiated by the second terminal, reference may be made to the foregoing description, with the same technical effects achieved. To avoid repetition, details are not repeated herein. It should be noted that negotiation messages involved in the negotiation procedure may be independent PC5 signaling, or may be existing PC5 signaling.

Optionally, the target path switching information further includes at least one of the following information:
a first path switching indication, used for indicating to perform switching between the first communication path and the second communication path for at least one of all services, all sessions, and all QoS flows on a current communication path between the first terminal and the second terminal in a case that the trigger condition is met;
a second path switching indication, including a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, including a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, including a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

It should be noted that for description and explanation of various types of information included in the target path switching information, reference may be made to the foregoing description, with the same technical effects achieved. To avoid repetition, details are not repeated herein.

Optionally, the trigger condition includes at least one of the following information:
a first QoS threshold and/or first communication interruption information, where the first QoS threshold and the first communication interruption information are associated with the current communication path between the first terminal and the second terminal, and the first QoS threshold is a threshold of a QoS parameter for the current communication path;
a second QoS threshold and/or second communication interruption information, where the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, where the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, where the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and the RSRP threshold, where the current communication path is the first communication path, the fifth QoS threshold is a threshold of a QoS parameter for the first communication path, and the RSRP threshold is a threshold of an RSRP for the second communication path.

It should be noted that for description and explanation of various types of information included in the trigger condition, reference may be made to the foregoing description, with the same technical effects achieved. To avoid repetition, details are not repeated herein.

Optionally, an implementation of performing switching between the first communication path and the second communication path based on the target path switching information by the second terminal may include at least one of the following:
1) In a case that the target path switching information includes the first path switching indication, the first QoS threshold, and/or first communication interruption information, the second terminal performs switching between the first communication path and the second communication path for at least one of all services, all sessions, and all QoS flows on the current communication path in a case that the current communication path is interrupted or a QoS parameter on the current communication path does not meet the first QoS threshold;
2) In a case that the target path switching information includes the second path switching indication, the second QoS threshold, and/or the second communication interruption information, the second terminal performs switching between the first communication path and the second communication path for the service corresponding to the first service type and/or the session corresponding to the first session type on the current communication path in a case that the current communication path is interrupted or a QoS parameter on the current communication path for the service corresponding to the first service type and/or the session corresponding to the first session type does not meet the second QoS threshold; or
   the second terminal performs switching between the first communication path and the second communication path for all the services and/or all the sessions on the current communication path in a case that the current communication path is interrupted or a QoS parameter on the current communication path for the service corresponding to the first service type and/or the session corresponding to the first session type does not meet the second QoS threshold.
3) In a case that the target path switching information includes the third path switching indication, the third QoS threshold, and/or the third communication interruption information, the second terminal performs switching between the first communication path and the second communication path for the service corresponding to the first service identifier and/or the session corresponding to the first session identifier on the current communication path in a case that the current communication path is interrupted or a QoS parameter on the current communication path for the service corresponding to the first service identifier and/or the session corresponding to the first session identifier does not meet the third QoS threshold; or
   the second terminal performs switching between the first communication path and the second communication path for all the services and/or all the sessions on the current communication path in a case that the current communication path is interrupted or a QoS parameter on the current communication path for the service corresponding to the first service identifier and/or the session corresponding to the first session identifier does not meet the third QoS threshold.
4) In a case that the target path switching information includes the fourth path switching indication, the fourth QoS threshold, and/or the fourth communication interruption information, the second terminal performs switching between the first communication path and the second communication path for the QoS flow corresponding to the first QoS flow identifier on the current communication path in a case that the current communication path is interrupted or a QoS parameter on the current communication path for the QoS flow corresponding to the first QoS flow identifier does not meet the fourth QoS threshold; or
   the second terminal performs switching between the first communication path and the second communication path for all the services and/or all the sessions on the current communication path in a case that the current communication path is interrupted or a QoS parameter on the current communication path for the QoS flow corresponding to the first QoS flow identifier does not meet the fourth QoS threshold.

Optionally, the second terminal receives first path switching cancellation information sent by the first terminal; where the first path switching cancellation information is used to indicate the second terminal to skip switching between the first communication path and the second communication path. The second terminal skips switching between the first communication path and the second communication path based on the first path switching cancellation information. The second terminal sends first path switching cancellation reply information to the first terminal.

Optionally, the first path switching cancellation information includes at least one of the following cause values: congestion control information, mobility restriction information, and not being within a cellular signal coverage.

Optionally, the first path switching cancellation information includes: trigger condition deactivation information, used for indicating the second terminal to deactivate the trigger condition; or path switching termination information, used for indicating the second terminal to terminate switching between the first communication path and the second communication path.

Optionally, the skipping, by the second terminal, switching between the first communication path and the second communication path based on the first path switching cancellation information includes: deleting, by the second terminal, the target path switching information in a case that the first path switching cancellation information includes the path switching termination information.

Optionally, the skipping, by the second terminal, switching between the first communication path and the second communication path based on the first path switching cancellation information includes: deactivating, by the second terminal, the trigger condition in a case that the first path switching cancellation information includes the trigger condition deactivation information.

Optionally, after the second terminal deactivates the trigger condition in a case that the first path switching cancellation information includes the trigger condition deactivation information, the second terminal receives first trigger condition activation information sent by the first terminal, where the first trigger condition activation information is used to indicate the second terminal to activate the trigger condition; and the second terminal activates the trigger condition based on the first trigger condition activation information.

Optionally, after the second terminal obtains the target path switching information, the second terminal receives second trigger condition activation information sent by the first terminal; where the second trigger condition activation information is used to indicate the second terminal to activate the trigger condition; and the second terminal activates the trigger condition based on the second trigger condition activation information.

Optionally, the second terminal sends second path switching cancellation information to the first terminal in a case that the second terminal is unable to perform switching between the first communication path and the second communication path; where the second path switching cancellation information is used to indicate the first terminal to skip switching between the first communication path and the second communication path; and the second terminal receives second path switching cancellation reply information sent by the first terminal.

Optionally, the performing, by a second terminal, switching between a first communication path and a second communication path based on target path switching information includes: performing, by the second terminal, switching from the first communication path to the second communication path based on the target path switching information in a case that a current communication path between the first terminal and the second terminal is the first communication path; or performing, by the second terminal, switching from the second communication path to the first communication path based on the target path switching information in a case that the current communication path is the second communication path.

Optionally, using the first communication path being a direct PC5 communication path and the second communication path being a direct Uu communication path as an example, after the first terminal obtains the target path switching information, the first terminal performs switching between the direct PC5 communication path and the direct Uu communication path based on the target path switching information. Initial communication of the first terminal is one of the direct PC5 communication and the direct Uu communication, and communication after switching is communication that is different from the initial communication in the direct PC5 communication and the direct Uu communication.

Optionally, using the first communication path being a direct PC5 communication path and the second communication path being a direct Uu communication path as an example, FIG. 4 is a schematic signaling flowchart of a negotiation procedure initiated by a first terminal according to an embodiment of this application. As shown in FIG. 4, the method includes the following steps.

Step 401: The first terminal sends first path switching information to a second terminal; where the first path switching information includes a trigger condition accepted by the first terminal for triggering switching between a direct PC5 communication path and a direct Uu communication path.

Optionally, the first path switching information includes at least one of the following: a first path switching indication, a second path switching indication, a third path switching indication, a fourth path switching indication, a path switching direction, a first QoS threshold and/or first communication interruption information, a second QoS threshold and/or second communication interruption information, a third QoS threshold and/or third communication interruption information, a fourth QoS threshold and/or fourth communication interruption information, and a fifth QoS threshold and RSRP threshold.

Step 402: After the second terminal receives the first path switching information sent by the first terminal, the second terminal determines the target path switching information based on the first path switching information, in a case that the second terminal accepts switching between the direct PC5 communication path and the direct Uu communication path.

Step 403: The second terminal sends the target path switching information to the first terminal; where the target path switching information is information that can be accepted by the second terminal from the first path switching information.

Step 404: The first terminal receives the target path switching information sent by the second terminal; and the first terminal and the second terminal perform switching between the direct PC5 communication path and the direct Uu communication path based on the target path switching information.

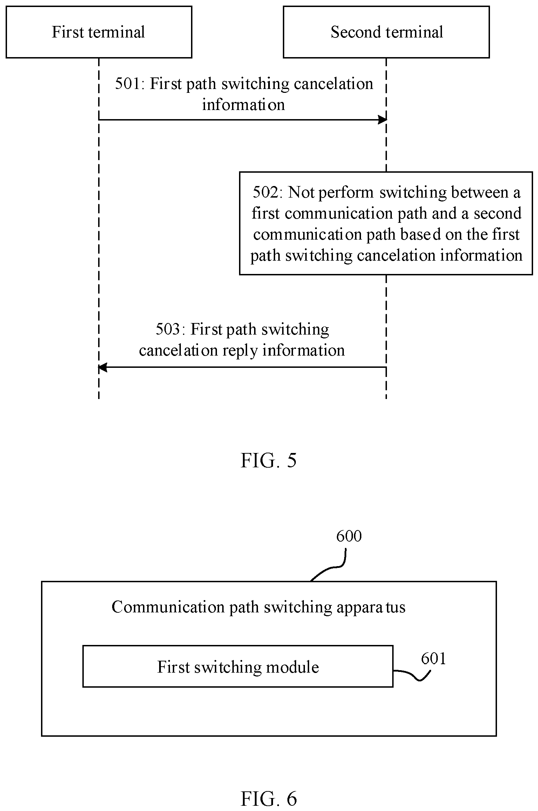

Optionally, using the first communication path being a direct PC5 communication path and the second communication path being a direct Uu communication path as an example, FIG. 5 is a schematic signaling flowchart of a path switching cancellation procedure initiated by a first terminal according to an embodiment of this application. As shown in FIG. 5, the method includes the following steps.

Step 501: The first terminal sends first path switching cancellation information to a second terminal in a case that the first terminal is unable to perform switching between the direct PC5 communication path and the direct Uu communication path; where the first path switching cancellation information is used to indicate the second terminal to skip switching between the first communication path and the second communication path.

Optionally, the first path switching cancellation information includes at least one of the following cause values: congestion control information, mobility restriction information, and not being within a cellular signal coverage.

Step 502: The second terminal receives first path switching cancellation information sent by the first terminal; and the second terminal does not perform switching between the first communication path and the second communication path based on the first path switching cancellation information.

Optionally, the first path switching cancellation information includes:
trigger condition deactivation information; where the trigger condition deactivation information includes a deactivation cause value for indicating the second terminal to deactivate the trigger condition; where the deactivation cause value includes at least one of the following cause values: congestion control information, mobility restriction information, and not being within a cellular signal coverage; or
path switching termination information, where the path switching termination information is used for indicating the second terminal to terminate switching between the first communication path and the second communication path.

Optionally, after the second terminal deactivates the trigger condition, the second terminal cancels execution of switching between the first communication path and the second communication path in a case that the trigger condition is met.

Optionally, in a case that the deactivation cause value includes the congestion control information, the trigger condition deactivation information may further include a timer. Specifically, after receiving the trigger condition deactivation information, the second terminal activates the timer; and before the timer reaches a target duration, in a case that the trigger condition is met, the second terminal does not perform switching between the first communication path and the second communication path. After the timer reaches the target duration, the second terminal reactivates the trigger condition, that is, in a case that the trigger condition is met, the second terminal performs switching between the first communication path and the second communication path.

Step 503: The second terminal sends first path switching cancellation reply information to the first terminal, and the first terminal receives the first path switching cancellation reply information sent by the second terminal.

Optionally, after the first terminal receives first path switching cancellation reply information sent by the second terminal, the first terminal deletes the target path switching information in a case the first path switching cancellation information includes the path switching termination information; or
the first terminal deactivates the trigger condition in a case that the first path switching cancellation information includes the trigger condition deactivation information, that is, in a case that the trigger condition is met, the first terminal cancels execution of switching between the first communication path and the second communication path.

It should be noted that, for the communication path switching method provided by the embodiments of this application, the execution body may be a communication path switching apparatus, or a control module for executing the communication path switching method in the communication path switching apparatus. In the embodiments of this application, the communication path switching apparatus provided in the embodiments of this application is described by using the communication path switching method being executed by the communication path switching apparatus as an example.

FIG. 6 is a first schematic structural diagram of a communication path switching apparatus according to an embodiment of this application. As shown in FIG. 6, the communication path switching apparatus 600 is applied to a first terminal and includes:
a first switching module 601, configured to perform switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

In the communication path switching apparatus provided in this embodiment of this application, switching between the first communication path and the second communication path is performed based on the path switching indication information, so that the first terminal and the second terminal can obtain, based on the same path switching indication information, consistent understanding on the trigger condition and occasion for switching between the first communication path and the second communication path, thereby implementing synchronized path switching between direct communication and wireless communication. This can ensure continuity of services between the first terminal and the second terminal, and improve quality of service for the services.

Optionally, the following is further included:
a first obtaining module, configured to obtain the target path switching information.

Optionally, the first obtaining module is specifically configured to:
receive the target path switching information sent by the network-side device; or
receive the target path switching information sent by the second terminal.

Optionally, the first obtaining module is specifically configured to: send first path switching information to the second terminal; where the first path switching information includes a trigger condition accepted by the first terminal for triggering switching between the first communication path and the second communication path; and receive the target path switching information sent by the second terminal; where the target path switching information is information accepted by the second terminal from the first path switching information.

Optionally, the first obtaining module is specifically configured to: receive second path switching information sent by the second terminal; where the second path switching information includes a trigger condition accepted by the second terminal for triggering switching between the first communication path and the second communication path; determine the target path switching information based on the second path switching information; where the target path switching information is information accepted by the first terminal from the second path switching information; and send the target path switching information to the second terminal.

Optionally, the target path switching information further includes at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, including a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, including a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, including a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

Optionally, the trigger condition includes at least one of the following information:
a first QoS threshold and/or first communication interruption information, where the first QoS threshold and the first communication interruption information are associated with the current communication path between the first terminal and the second terminal, and the first QoS threshold is a threshold of a QoS parameter for the current communication path;
a second QoS threshold and/or second communication interruption information, where the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, where the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, where the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, where the current communication path is the first communication path, the fifth QoS threshold is a threshold of a QoS parameter for the first communication path, and the RSRP threshold is a threshold of an RSRP for the second communication path.

Optionally, the following is further included:
a first transmission module, configured to send first path switching cancellation information to the second terminal in a case that switching between the first communication path and the second communication path is unable to be performed; where the first path switching cancellation information is used to indicate the second terminal to skip switching between the first communication path and the second communication path; and
a first receiving module, configured to receive first path switching cancellation reply information sent by the second terminal.

Optionally, the first path switching cancellation information includes at least one of the following cause values:
congestion control information, mobility restriction information, and not being within a cellular signal coverage.

Optionally, the first path switching cancellation information includes:
trigger condition deactivation information, used for indicating the second terminal to deactivate the trigger condition; or
path switching termination information, used for indicating the second terminal to terminate switching between the first communication path and the second communication path.

Optionally, the following is further included:
a deletion module, configured to delete the target path switching information in a case that the first path switching cancellation information includes the path switching termination information.

Optionally, the following is further included:
a deactivation module, configured to deactivate the trigger condition in a case that the first path switching cancellation information includes the trigger condition deactivation information.

Optionally, the following is further included:
a second transmission module, configured to send first trigger condition activation information to the second terminal in a case that the switching between the first communication path and the second communication path is resumed; where the first trigger condition activation information is used to indicate the second terminal to activate the trigger condition.

Optionally, the following is further included:
a third transmission module, configured to send second trigger condition activation information to the second terminal; where the second trigger condition activation information is used to indicate the second terminal to activate the trigger condition.

Optionally, the following is further included:
a second receiving module, configured to receive second path switching cancellation information sent by the second terminal; where the second path switching cancellation information is used to indicate the first terminal to skip switching between the first communication path and the second communication path;
a first execution cancellation module, configured to skip switching between the first communication path and the second communication path based on the second path switching cancellation information; and
a fourth transmission module, configured to send second path switching cancellation reply information to the second terminal.

Optionally, the first switching module 601 is specifically configured to:
perform switching from the first communication path to the second communication path in a case that a current communication path between the first terminal and the second terminal is the first communication path; or
perform switching from the second communication path to the first communication path in a case that the current communication path is the second communication path.

Optionally, the first switching module 601 is specifically configured to perform at least one of the following:
in a case that the target path switching information includes the first path switching indication, the first QoS threshold, and/or the first communication interruption information, performing switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information includes the second path switching indication, the second QoS threshold, and/or the second communication interruption information, performing switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information includes the third path switching indication, the third QoS threshold, and/or the third communication interruption information, performing switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information includes the fourth path switching indication, the fourth QoS threshold, and/or the fourth communication interruption information, performing switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information includes the fifth QoS threshold and the RSRP threshold, performing switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

The communication path switching apparatus in this embodiment of this application may be an apparatus, or an apparatus or electric device having an operating system, or may be a component, an integrated circuit, or a chip in the electric device. The apparatus or electric device may be a mobile terminal or a non-mobile terminal. For example, the mobile terminal may include but is not limited to the types of the first terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

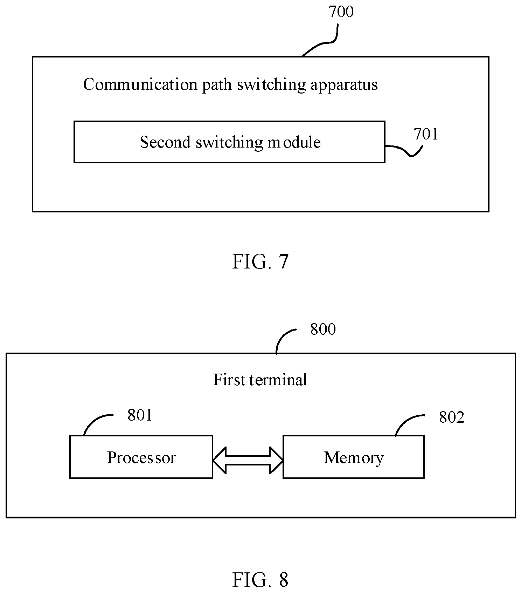

FIG. 7 is a second schematic structural diagram of a communication path switching apparatus according to an embodiment of this application. As shown in FIG. 7, the communication path switching apparatus 700 is applied to the second terminal, including:
a second switching module 701, configured to perform switching between a first communication path and a second communication path based on target path switching information; where
the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

In the communication path switching apparatus provided in this embodiment of this application, switching between the first communication path and the second communication path is performed based on the path switching indication information, so that the first terminal and the second terminal can obtain, based on the same path switching indication information, consistent understanding on the trigger condition and occasion for switching between the first communication path and the second communication path, thereby implementing synchronized path switching between direct communication and wireless communication. This can ensure continuity of services between the first terminal and the second terminal, and improve quality of service for the services.

Optionally, the following is further included:
a second obtaining module, configured to obtain the target path switching information.

Optionally, the second obtaining module is specifically configured to:
receive the target path switching information sent by the network-side device; or
receive the target path switching information sent by the first terminal.

Optionally, the second obtaining module is specifically configured to: receive first path switching information sent by the first terminal; where the first path switching information includes a trigger condition accepted by the first terminal for triggering switching between the first communication path and the second communication path; determine the target path switching information based on the first path switching information; where the target path switching information is information accepted by the second terminal from the first path switching information; and send the target path switching information to the first terminal.

Optionally, the second obtaining module is specifically configured to: send second path switching information to the first terminal; where the second path switching information includes a trigger condition accepted by the second terminal for triggering switching between the first communication path and the second communication path; and receive the target path switching information sent by the first terminal; where the target path switching information is information accepted by the first terminal from the second path switching information.

Optionally, the target path switching information further includes at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, including a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, including a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, including a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

Optionally, the trigger condition includes at least one of the following information:
a first QoS threshold and/or first communication interruption information, where the first QoS threshold and the first communication interruption information are associated with the current communication path between the first terminal and the second terminal, and the first QoS threshold is a threshold of a QoS parameter for the current communication path;
a second QoS threshold and/or second communication interruption information, where the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, where the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, where the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, where the current communication path is the first communication path, the fifth QoS threshold is a threshold of a QoS parameter for the first communication path, and the RSRP threshold is a threshold of an RSRP for the second communication path.

Optionally, the following is further included:
a third receiving module, configured to receive first path switching cancellation information sent by the first terminal; where the first path switching cancellation information is used to indicate the second terminal to skip switching between the first communication path and the second communication path;
a second execution cancellation module, configured to skip switching between the first communication path and the second communication path based on the first path switching cancellation information; and
a fifth transmission module, configured to send first path switching cancellation reply information to the first terminal.

Optionally, the first path switching cancellation reply information includes at least one of the following cause values:
congestion control information, mobility restriction information, and not being within a cellular signal coverage.

Optionally, the first path switching cancellation information includes:
trigger condition deactivation information, used for indicating the second terminal to deactivate the trigger condition; or
path switching termination information, used for indicating the second terminal to terminate switching between the first communication path and the second communication path.

Optionally, the second execution cancellation module is specifically configured to delete the target path switching information in a case that the first path switching cancellation information includes the path switching termination information.

Optionally, the second execution cancellation module is specifically configured to deactivate the trigger condition in a case that the first path switching cancellation information includes the trigger condition deactivation information.

Optionally, the following is further included:
a fourth receiving module, configured to receive first trigger condition activation information sent by the first terminal; where the first trigger condition activation information is used to indicate the second terminal to activate the trigger condition; and
a first activation module, configured to activate the trigger condition based on the first trigger condition activation information.

Optionally, the following is further included:
a fifth receiving module, configured to receive second trigger condition activation information sent by the first terminal; where the second trigger condition activation information is used to indicate the second terminal to activate the trigger condition; and
a second activation module, configured to activate the trigger condition based on the second trigger condition activation information.

Optionally, the following is further included:
a sixth transmission module, configured to send second path switching cancellation information to the first terminal in a case that switching between the first communication path and the second communication path is unable to be performed; where the second path switching cancellation information is used to indicate the first terminal to skip switching between the first communication path and the second communication path; and
a sixth receiving module, configured to receive second path switching cancellation reply information sent by the first terminal.

Optionally, the second switching module 701 is specifically configured to:
perform switching from the first communication path to the second communication path in a case that a current communication path between the first terminal and the second terminal is the first communication path; or
perform switching from the second communication path to the first communication path in a case that the current communication path is the second communication path.

Optionally, the second switching module 701 is specifically configured to perform at least one of the following:
in a case that the target path switching information includes the first path switching indication, the first QoS threshold, and/or the first communication interruption information, performing switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information includes the second path switching indication, the second QoS threshold, and/or the second communication interruption information, performing switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information includes the third path switching indication, the third QoS threshold, and/or the third communication interruption information, performing switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information includes the fourth path switching indication, the fourth QoS threshold, and/or the fourth communication interruption information, performing switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information includes the fifth QoS threshold and the RSRP threshold, performing switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

The communication path switching apparatus in this embodiment of this application may be an apparatus, or an apparatus or electric device having an operating system, or may be a component, an integrated circuit, or a chip in the electric device. The apparatus or electric device may be a mobile terminal or a non-mobile terminal. For example, the mobile terminal may include but is not limited to the types of the second terminal 12 listed above, and the non-mobile terminal may be a server, a network attached storage (Network Attached Storage, NAS), a personal computer (personal computer, PC), a television (television, TV), a teller machine, a self-service machine, or the like, which is not specifically limited in this embodiment of this application.

The communication path switching apparatus provided in this embodiment of this application is capable of implementing the processes implemented in the method embodiments in FIG. 2 to FIG. 7, with the same technical effects achieved. To avoid repetition, details are not repeated herein.

FIG. 8 is a first schematic structural diagram of a first terminal according to an embodiment of this application. As shown in FIG. 8, the first terminal 800 includes a processor 801, a memory 802, and a program or an instruction stored in the memory 802 and executable on the processor 801. When the program or the instruction is executed by the processor 801, the processes of the foregoing communication path switching method embodiments are implemented, with the same technical effects achieved. To avoid repetition, details are not repeated herein.

An embodiment of this application further provides a first terminal, including a processor and a communication interface, where the processor is configured to, for the first terminal, perform switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path. The first terminal embodiments correspond to the foregoing first terminal-side method embodiments, and the implementation processes and implementations of the foregoing method embodiments can be applied to the first terminal embodiments, with the same technical effects achieved.

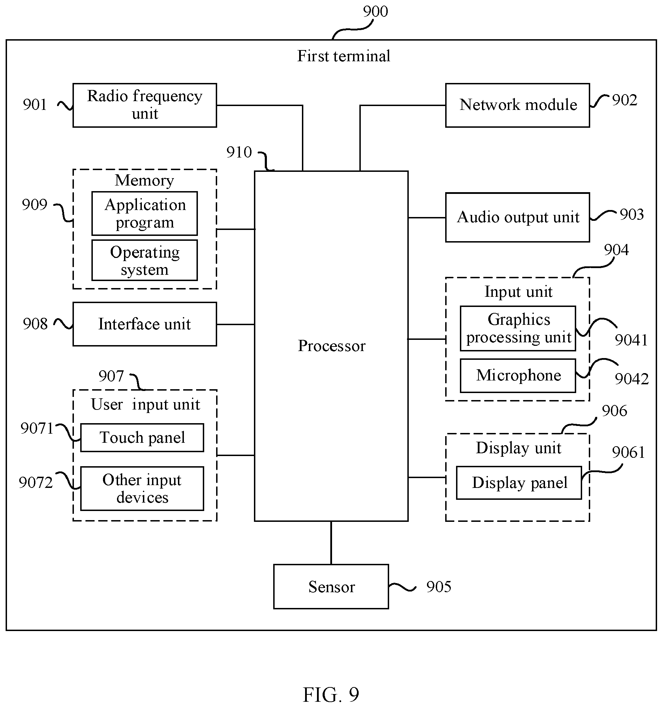

FIG. 9 is a second schematic structural diagram of a first terminal according to an embodiment of this application. As shown in FIG. 9, the first terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the first terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the first terminal shown in FIG. 9 does not constitute any limitation on the first terminal. The first terminal may include more or fewer components than shown in the figure, or a combination of some components, or the components disposed differently. Details are not repeated herein.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, and the like. The user input unit 907 may include a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or a power on/off key), a trackball, a mouse, a joystick, and the like. Details are not described herein.

In this embodiment of this application, the radio frequency unit 901 receives downlink data from a network-side device, and then sends the downlink data to the processor 910 for processing; and also sends uplink data to the network-side device. Generally, the radio frequency unit 901 includes but is not limited to an antenna, at least one amplifier, a transceiver, a coupler, a low noise amplifier, a duplexer, and the like.

The memory 909 may be configured to store software programs or instructions and various data. The memory 909 may include a program or instruction storage area and a data storage area. The program or instruction storage area may store an operating system, an application program or instruction required by at least one function (for example, a sound playback function or an image playback function), and the like. In addition, the memory 909 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 910 may include one or more processing units. Optionally, an application processor and a modem processor may be integrated in the processor 910. The application processor primarily processes an operating system, user interfaces, application programs or instructions, and the like. The modem processor primarily processes radio communication, for example, being a baseband processor. It can be understood that the modem processor may alternatively be not integrated in the processor 910.

The processor 910 is configured to perform switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path.

The first terminal provided in this embodiment of this application performs switching between a first communication path and a second communication path based on target path switching information, so that the first terminal and a second terminal can implement, based on same path switching indication information, synchronized path switching between direct communication and wireless communication. This can ensure continuity of services between the first terminal and the second terminal, and improve quality of service for the services.

Optionally, the processor 910 is further configured to obtain the target path switching information.

Optionally, the processor 910 is further configured to receive the target path switching information sent by the network-side device; or receive the target path switching information sent by the second terminal.

Optionally, the processor 910 is further configured to:
send first path switching information to the second terminal; where the first path switching information includes a trigger condition accepted by the first terminal for triggering switching between the first communication path and the second communication path; and
receive the target path switching information sent by the second terminal; where the target path switching information is information accepted by the second terminal from the first path switching information.

Optionally, the processor 910 is further configured to:
receive second path switching information sent by the second terminal; where the second path switching information includes a trigger condition accepted by the second terminal for triggering switching between the first communication path and the second communication path;
determine the target path switching information based on the second path switching information; where the target path switching information is information accepted by the first terminal from the second path switching information; and
send the target path switching information to the second terminal.

Optionally, the target path switching information further includes at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, including a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, including a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, including a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

Optionally, the trigger condition includes at least one of the following information:
a first QoS threshold and/or first communication interruption information, where the first QoS threshold and the first communication interruption information are associated with the current communication path between the first terminal and the second terminal, and the first QoS threshold is a threshold of a QoS parameter for the current communication path;
a second QoS threshold and/or second communication interruption information, where the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, where the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, where the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, where the current communication path is the first communication path, the fifth QoS threshold is a threshold of a QoS parameter for the first communication path, and the RSRP threshold is a threshold of an RSRP for the second communication path.

Optionally, the radio frequency unit 901 is configured to: send first path switching cancellation information to the second terminal in a case that switching between the first communication path and the second communication path is unable to be performed; where the first path switching cancellation information is used to indicate the second terminal to skip switching between the first communication path and the second communication path; and receive first path switching cancellation reply information sent by the second terminal.

Optionally, the first path switching cancellation reply information includes at least one of the following cause values:
congestion control information, mobility restriction information, and not being within a cellular signal coverage.

Optionally, the first path switching cancellation information includes:
trigger condition deactivation information, used for indicating the second terminal to deactivate the trigger condition; or
path switching termination information, used for indicating the second terminal to terminate switching between the first communication path and the second communication path.

Optionally, the processor 910 is further configured to: delete the target path switching information in a case that the first path switching cancellation information includes the path switching termination information.

Optionally, the processor 910 is further configured to: deactivate the trigger condition in a case that the first path switching cancellation information includes the trigger condition deactivation information.

Optionally, the radio frequency unit 901 is further configured to: send first trigger condition activation information to the second terminal in a case that the switching between the first communication path and the second communication path is resumed; where the first trigger condition activation information is used to indicate the second terminal to activate the trigger condition.

Optionally, the radio frequency unit 901 is further configured to: send second trigger condition activation information to the second terminal; where the second trigger condition activation information is used to indicate the second terminal to activate the trigger condition.

Optionally, the radio frequency unit 901 is further configured to: receive second path switching cancellation information sent by the second terminal; where the second path switching cancellation information is used to indicate the first terminal to skip switching between the first communication path and the second communication path.

The processor 910 is further configured to: skip switching between the first communication path and the second communication path based on the second path switching cancellation information.

The radio frequency unit 901 is further configured to: send second path switching cancellation reply information to the second terminal.

Optionally, the processor 910 is further configured to:
perform switching from the first communication path to the second communication path in a case that a current communication path between the first terminal and the second terminal is the first communication path; or
perform switching from the second communication path to the first communication path in a case that the current communication path is the second communication path.

Optionally, the processor 910 is further configured to perform at least one of the following:
in a case that the target path switching information includes the first path switching indication, the first QoS threshold, and/or the first communication interruption information, performing switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information includes the second path switching indication, the second QoS threshold, and/or the second communication interruption information, performing switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information includes the third path switching indication, the third QoS threshold, and/or the third communication interruption information, performing switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information includes the fourth path switching indication, the fourth QoS threshold, and/or the fourth communication interruption information, performing switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information includes the fifth QoS threshold and the RSRP threshold, performing switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

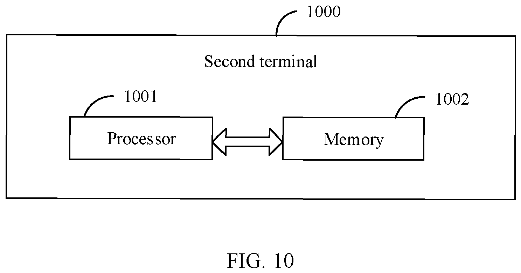

FIG. 10 is a schematic structural diagram of a second terminal according to an embodiment of this application. As shown in FIG. 10, the second terminal 1000 includes a processor 1001, a memory 1002, and a program or instructions stored in the memory 1002 and executable on the processor 1001. When the program or the instructions are executed by the processor 1001, the processes of the foregoing communication path switching method embodiments are implemented, with the same technical effects achieved. To avoid repetition, details are not repeated herein.

An embodiment of this application further provides a second terminal, including a processor and a communication interface, where the processor is configured to perform switching between a first communication path and a second communication path based on target path switching information; where the first communication path is a communication path for direct communication between the first terminal and a second terminal; the second communication path is a communication path for wireless communication between the first terminal and the second terminal via a network-side device; and the target path switching information includes: a trigger condition for triggering the switching between the first communication path and the second communication path. The second terminal embodiments correspond to the foregoing second terminal-side method embodiments, and the implementation processes and implementations of the foregoing method embodiments can be applied to the second terminal embodiments, with the same technical effects achieved.

An embodiment of this application further provides a readable storage medium. The readable storage medium may be volatile or non-volatile. A program or instructions are stored in the readable storage medium. When the program or the instructions are executed by a processor, the processes of the foregoing communication path switching method embodiments can be implemented, with the same technical effects achieved. To avoid repetition, details are not repeated herein.

The processor is a processor in the terminal described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to execute a program or an instruction to implement the processes of the foregoing communication path switching method embodiments, with the same technical effects achieved. To avoid repetition, details are not repeated herein.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a non-transitory storage medium, and when being executed by at least one processor, the program/program product is configured to implement the processes of the foregoing communication path switching method embodiments, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A communication path switching method, comprising:
performing, by a first terminal, switching between a first communication path and a second communication path based on target path switching information; wherein
the first communication path is a communication path for direct communication between the first terminal and a second terminal; the second communication path is a communication path for wireless communication between the first terminal and the second terminal via a network-side device; and the target path switching information comprises: a trigger condition for triggering the switching between the first communication path and the second communication path.

2. The communication path switching method according to claim 1, wherein the method further comprises:
obtaining, by the first terminal, the target path switching information.

3. The communication path switching method according to claim 2, wherein the obtaining, by the first terminal, the target path switching information comprises:
receiving, by the first terminal, the target path switching information sent by the network-side device; or
receiving, by the first terminal, the target path switching information sent by the second terminal.

4. The communication path switching method according to claim 2, wherein the obtaining, by the first terminal, the target path switching information comprises:
sending, by the first terminal, first path switching information to the second terminal; wherein the first path switching information comprises a trigger condition accepted by the first terminal for triggering switching between the first communication path and the second communication path; and
receiving, by the first terminal, the target path switching information sent by the second terminal; wherein the target path switching information is information accepted by the second terminal from the first path switching information.

5. The communication path switching method according to claim 2, wherein the obtaining, by the first terminal, the target path switching information comprises:
receiving, by the first terminal, second path switching information sent by the second terminal; wherein the second path switching information comprises a trigger condition accepted by the second terminal for triggering switching between the first communication path and the second communication path;
determining, by the first terminal, the target path switching information based on the second path switching information; wherein the target path switching information is information accepted by the first terminal from the second path switching information; and
sending, by the first terminal, the target path switching information to the second terminal.

6. The communication path switching method according to claim 1, wherein the target path switching information further comprises at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, comprising a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, comprising a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, comprising a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

7. The communication path switching method according to claim 6, wherein the trigger condition comprises at least one of the following information:
a first QoS threshold and/or first communication interruption information, wherein the first QoS threshold and the first communication interruption information are associated with the current communication path between the first terminal and the second terminal, and the first QoS threshold is a threshold of a QoS parameter for the current communication path;
a second QoS threshold and/or second communication interruption information, wherein the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, wherein the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, wherein the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, wherein the current communication path is the first communication path, the fifth QoS threshold is a threshold of a QoS parameter for the first communication path, and the RSRP threshold is a threshold of an RSRP for the second communication path.

8. The communication path switching method according to claim 1, wherein the method further comprises:
sending, by the first terminal, first path switching cancellation information to the second terminal in a case that the first terminal is unable to perform switching between the first communication path and the second communication path; wherein the first path switching cancellation information is used to indicate the second terminal to skip switching between the first communication path and the second communication path; and
receiving, by the first terminal, first path switching cancellation reply information sent by the second terminal.

9. The communication path switching method according to claim 8, wherein the first path switching cancellation information comprises at least one of the following cause values:
congestion control information, mobility restriction information, and not being within a cellular signal coverage.

10. The communication path switching method according to claim 8, wherein the first path switching cancellation information comprises:
trigger condition deactivation information, used for indicating the second terminal to deactivate the trigger condition; or
path switching termination information, used for indicating the second terminal to terminate switching between the first communication path and the second communication path.

11. The communication path switching method according to claim 10, wherein after the first terminal receives the first path switching cancellation reply information sent by the second terminal, the method further comprises:
deleting, by the first terminal, the target path switching information in a case that the first path switching cancellation information comprises the path switching termination information.

12. The communication path switching method according to claim 10, wherein after the first terminal receives the first path switching cancellation reply information sent by the second terminal, the method further comprises:
deactivating, by the first terminal, the trigger condition in a case that the first path switching cancellation information comprises the trigger condition deactivation information.

13. The communication path switching method according to claim 12, after the deactivating, by the first terminal, the trigger condition in a case that the first path switching cancellation information comprises the trigger condition deactivation information, further comprising:
sending, by the first terminal, first trigger condition activation information to the second terminal in a case that the first terminal resumes switching between the first communication path and the second communication path; wherein the first trigger condition activation information is used to indicate the second terminal to activate the trigger condition.

14. The communication path switching method according to claim 1, after the obtaining, by the first terminal, the target path switching information, further comprising:
sending, by the first terminal, second trigger condition activation information to the second terminal; wherein the second trigger condition activation information is used to indicate the second terminal to activate the trigger condition.

15. The communication path switching method according to claim 1, wherein the method further comprises:
receiving, by the first terminal, second path switching cancellation information sent by the second terminal; wherein the second path switching cancellation information is used to indicate the first terminal to skip switching between the first communication path and the second communication path;
skipping, by the first terminal, switching between the first communication path and the second communication path based on the second path switching cancellation information; and
sending, by the first terminal, second path switching cancellation reply information to the second terminal.

16. The communication path switching method according to claim 1, wherein the performing, by a first terminal, switching between a first communication path and a second communication path based on target path switching information comprises:
performing, by the first terminal, switching from the first communication path to the second communication path based on the target path switching information in a case that a current communication path between the first terminal and the second terminal is the first communication path; or
performing, by the first terminal, switching from the second communication path to the first communication path based on the target path switching information in a case that the current communication path is the second communication path.

17. The communication path switching method according to claim 7, wherein the performing, by a first terminal, switching between a first communication path and a second communication path based on target path switching information comprises at least one of the following:
in a case that the target path switching information comprises the first path switching indication, the first QoS threshold, and/or the first communication interruption information, performing, by the first terminal, switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information comprises the second path switching indication, the second QoS threshold, and/or the second communication interruption information, performing, by the first terminal, switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing, by the first terminal, switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information comprises the third path switching indication, the third QoS threshold, and/or the third communication interruption information, performing, by the first terminal, switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing, by the first terminal, switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information comprises the fourth path switching indication, the fourth QoS threshold, and/or the fourth communication interruption information, performing, by the first terminal, switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing, by the first terminal, switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information comprises the fifth QoS threshold and the RSRP threshold, performing, by the first terminal, switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

18. A communication path switching method, comprising:
performing, by a second terminal, switching between a first communication path and a second communication path based on target path switching information; wherein
the first communication path is a communication path for direct communication between the first terminal and a second terminal; the second communication path is a communication path for wireless communication between the first terminal and the second terminal via a network-side device; and the target path switching information comprises: a trigger condition for triggering the switching between the first communication path and the second communication path.

19. The communication path switching method according to claim 18, wherein the method further comprises:
obtaining, by the second terminal, the target path switching information.

20. The communication path switching method according to claim 19, wherein the obtaining, by the second terminal, the target path switching information comprises:
receiving, by the second terminal, the target path switching information sent by the network-side device; or
receiving, by the second terminal, the target path switching information sent by the first terminal.

21. The communication path switching method according to claim 19, wherein the obtaining, by the second terminal, the target path switching information comprises:
receiving, by the second terminal, first path switching information sent by the first terminal; wherein the first path switching information comprises a trigger condition accepted by the first terminal for triggering switching between the first communication path and the second communication path;
determining, by the second terminal, the target path switching information based on the first path switching information; wherein the target path switching information is information accepted by the second terminal from the first path switching information; and
sending, by the second terminal, the target path switching information to the first terminal.

22. The communication path switching method according to claim 19, wherein the obtaining, by the second terminal, the target path switching information comprises:
sending, by the second terminal, second path switching information to the first terminal; wherein the second path switching information comprises a trigger condition accepted by the second terminal for triggering switching between the first communication path and the second communication path; and
receiving, by the second terminal, the target path switching information sent by the first terminal; wherein the target path switching information is information accepted by the first terminal from the second path switching information.

23. The communication path switching method according to claim 18, wherein the target path switching information further comprises at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, comprising a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, comprising a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, comprising a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

24. The communication path switching method according to claim 23, wherein the trigger condition comprises at least one of the following information:
a first QoS threshold and/or first communication interruption information, wherein the first QoS threshold and the first communication interruption information are associated with the current communication path between the first terminal and the second terminal, and the first QoS threshold is a threshold of a QoS parameter for the current communication path;
a second QoS threshold and/or second communication interruption information, wherein the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, wherein the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, wherein the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, wherein the current communication path is the first communication path, the fifth QoS threshold is a threshold of a QoS parameter for the first communication path, and the RSRP threshold is a threshold of an RSRP for the second communication path.

25. The communication path switching method according to claim 18, wherein the method further comprises:
receiving, by the second terminal, first path switching cancellation information sent by the first terminal; wherein the first path switching cancellation information is used to indicate the second terminal to skip switching between the first communication path and the second communication path;
skipping, by the second terminal, switching between the first communication path and the second communication path based on the first path switching cancellation information; and
sending, by the second terminal, first path switching cancellation reply information to the first terminal.

26. The communication path switching method according to claim 25, wherein the first path switching cancellation information comprises at least one of the following cause values:
congestion control information, mobility restriction information, and not being within a cellular signal coverage.

27. The communication path switching method according to claim 25, wherein the first path switching cancellation information comprises:
trigger condition deactivation information, used for indicating the second terminal to deactivate the trigger condition; or
path switching termination information, used for indicating the second terminal to terminate switching between the first communication path and the second communication path.

28. The communication path switching method according to claim 27, wherein the skipping, by the second terminal, switching between the first communication path and the second communication path based on the first path switching cancellation information comprises:
deleting, by the second terminal, the target path switching information in a case that the first path switching cancellation information comprises the path switching termination information.

29. The communication path switching method according to claim 27, wherein the skipping, by the second terminal, switching between the first communication path and the second communication path based on the first path switching cancellation information comprises:
deactivating, by the second terminal, the trigger condition in a case that the first path switching cancellation information comprises the trigger condition deactivation information.

30. The communication path switching method according to claim 29, after the deactivating, by the second terminal, the trigger condition in a case that the first path switching cancellation information comprises the trigger condition deactivation information, further comprising:
receiving, by the second terminal, first trigger condition activation information sent by the first terminal; wherein the first trigger condition activation information is used to indicate the second terminal to activate the trigger condition; and
activating, by the second terminal, the trigger condition based on the first trigger condition activation information.

31. The communication path switching method according to claim 19, after the obtaining, by the second terminal, the target path switching information, further comprising:
receiving, by the second terminal, second trigger condition activation information sent by the first terminal; wherein the second trigger condition activation information is used to indicate the second terminal to activate the trigger condition; and
activating, by the second terminal, the trigger condition based on the second trigger condition activation information.

32. The communication path switching method according to claim 18, wherein the method further comprises:
sending, by the second terminal, second path switching cancellation information to the first terminal in a case that the second terminal is unable to perform switching between the first communication path and the second communication path; wherein the second path switching cancellation information is used to indicate the first terminal to skip switching between the first communication path and the second communication path; and
receiving, by the second terminal, second path switching cancellation reply information sent by the first terminal.

33. The communication path switching method according to claim 18, wherein the performing, by a second terminal, switching between a first communication path and a second communication path based on target path switching information comprises:
performing, by the second terminal, switching from the first communication path to the second communication path based on the target path switching information in a case that a current communication path between the first terminal and the second terminal is the first communication path; or
performing, by the second terminal, switching from the second communication path to the first communication path based on the target path switching information in a case that the current communication path is the second communication path.

34. The communication path switching method according to claim 24, wherein the performing, by a second terminal, switching between a first communication path and a second communication path based on target path switching information comprises at least one of the following:
in a case that the target path switching information comprises the first path switching indication, the first QoS threshold, and/or the first communication interruption information, performing, by the second terminal, switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information comprises the second path switching indication, the second QoS threshold, and/or the second communication interruption information, performing, by the second terminal, switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing, by the second terminal, switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information comprises the third path switching indication, the third QoS threshold, and/or the third communication interruption information, performing, by the second terminal, switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing, by the second terminal, switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information comprises the fourth path switching indication, the fourth QoS threshold, and/or the fourth communication interruption information, performing, by the second terminal, switching between the first communication path and the second communication path for the QoS flow corresponding to the QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing, by the second terminal, switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information comprises the fifth QoS threshold and the RSRP threshold, performing, by the second terminal, switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

35. A communication path switching apparatus is provided, applied to a first terminal and comprising:
a first switching module, configured to perform switching between a first communication path and a second communication path based on target path switching information; wherein
the first communication path is a communication path for direct communication between the first terminal and a second terminal; the second communication path is a communication path for wireless communication between the first terminal and the second terminal via a network-side device; and the target path switching information comprises: a trigger condition for triggering the switching between the first communication path and the second communication path.

36. The communication path switching apparatus according to claim 35, wherein the apparatus further comprises:
a first obtaining module, configured to obtain the target path switching information.

37. The communication path switching apparatus according to claim 36, wherein the first obtaining module is specifically configured to:
receive the target path switching information sent by the network-side device; or
receive the target path switching information sent by the second terminal.

38. The communication path switching apparatus according to claim 36, wherein the first obtaining module is specifically configured to:
send first path switching information to the second terminal; wherein the first path switching information comprises a trigger condition accepted by the first terminal for triggering switching between the first communication path and the second communication path; and
receive the target path switching information sent by the second terminal; wherein the target path switching information is information accepted by the second terminal from the first path switching information.

39. The communication path switching apparatus according to claim 36, wherein the first obtaining module is specifically configured to:
receive second path switching information sent by the second terminal; wherein the second path switching information comprises a trigger condition accepted by the second terminal for triggering switching between the first communication path and the second communication path;
determine the target path switching information based on the second path switching information; wherein the target path switching information is information accepted by the first terminal from the second path switching information; and
send the target path switching information to the second terminal.

40. The communication path switching apparatus according to claim 35, wherein the target path switching information further comprises at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, comprising a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, comprising a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, comprising a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

41. The communication path switching apparatus according to claim 40, wherein the trigger condition comprises at least one of the following information:
a first QoS threshold and/or first communication interruption information, wherein the first QoS threshold and the first communication interruption information are associated with the current communication path between the first terminal and the second terminal, and the first QoS threshold is a threshold of a QoS parameter for the current communication path;
a second QoS threshold and/or second communication interruption information, wherein the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, wherein the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, wherein the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, wherein the current communication path is the first communication path, the fifth QoS threshold is a threshold of a QoS parameter for the first communication path, and the RSRP threshold is a threshold of an RSRP for the second communication path.

42. The communication path switching apparatus according to claim 35, wherein the apparatus further comprises:
a first transmission module, configured to send first path switching cancellation information to the second terminal in a case that switching between the first communication path and the second communication path is unable to be performed; wherein the first path switching cancellation information is used to indicate the second terminal to skip switching between the first communication path and the second communication path; and
a first receiving module, configured to receive first path switching cancellation reply information sent by the second terminal.

43. The communication path switching apparatus according to claim 42, wherein the first path switching cancellation information comprises at least one of the following cause values:
congestion control information, mobility restriction information, and not being within a cellular signal coverage.

44. The communication path switching apparatus according to claim 42, wherein the first path switching cancellation information comprises:
trigger condition deactivation information, used for indicating the second terminal to deactivate the trigger condition; or
path switching termination information, used for indicating the second terminal to terminate switching between the first communication path and the second communication path.

45. The communication path switching apparatus according to claim 44, wherein the apparatus further comprises:
a deletion module, configured to delete the target path switching information in a case that the first path switching cancellation information comprises the path switching termination information.

46. The communication path switching apparatus according to claim 44, wherein the apparatus further comprises:
a deactivation module, configured to deactivate the trigger condition in a case that the first path switching cancellation information comprises the trigger condition deactivation information.

47. The communication path switching apparatus according to claim 46, further comprising:
a second transmission module, configured to send first trigger condition activation information to the second terminal in a case that the switching between the first communication path and the second communication path is resumed; wherein the first trigger condition activation information is used to indicate the second terminal to activate the trigger condition.

48. The communication path switching apparatus according to claim 35, further comprising:
a third transmission module, configured to send second trigger condition activation information to the second terminal; wherein the second trigger condition activation information is used to indicate the second terminal to activate the trigger condition.

49. The communication path switching apparatus according to claim 35, wherein the apparatus further comprises:
a second receiving module, configured to receive second path switching cancellation information sent by the second terminal; wherein the second path switching cancellation information is used to indicate the first terminal to skip switching between the first communication path and the second communication path;
a first execution cancellation module, configured to skip switching between the first communication path and the second communication path; and
a fourth transmission module, configured to send second path switching cancellation reply information to the second terminal.

50. The communication path switching apparatus according to claim 35, wherein the first switching module is specifically configured to:
perform switching from the first communication path to the second communication path based on the target path switching information in a case that a current communication path between the first terminal and the second terminal is the first communication path; or
perform switching from the second communication path to the first communication path based on the target path switching information in a case that the current communication path is the second communication path.

51. The communication path switching apparatus according to claim 41, wherein the first switching module is specifically configured to perform at least one of the following:
in a case that the target path switching information comprises the first path switching indication, the first QoS threshold, and/or the first communication interruption information, performing switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information comprises the second path switching indication, the second QoS threshold, and/or the second communication interruption information, performing switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information comprises the third path switching indication, the third QoS threshold, and/or the third communication interruption information, performing switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information comprises the fourth path switching indication, the fourth QoS threshold, and/or the fourth communication interruption information, performing switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information comprises the fifth QoS threshold and the RSRP threshold, performing switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

52. A communication path switching apparatus is provided, applied to a second terminal and comprising:
a second switching module, configured to perform switching between a first communication path and a second communication path based on target path switching information; wherein
the first communication path is a communication path for direct communication between the first terminal and a second terminal; the second communication path is a communication path for wireless communication between the first terminal and the second terminal via a network-side device; and the target path switching information comprises: a trigger condition for triggering the switching between the first communication path and the second communication path.

53. The communication path switching apparatus according to claim 52, wherein the apparatus further comprises:
a second obtaining module, configured to obtain the target path switching information.

54. The communication path switching apparatus according to claim 53, wherein the second obtaining module is specifically configured to:
receive the target path switching information sent by the network-side device; or
receive the target path switching information sent by the first terminal.

55. The communication path switching apparatus according to claim 53, wherein the second obtaining module is specifically configured to:
receive first path switching information sent by the first terminal; wherein the first path switching information comprises a trigger condition accepted by the first terminal for triggering switching between the first communication path and the second communication path;
determine the target path switching information based on the first path switching information; wherein the target path switching information is information accepted by the second terminal from the second path switching information; and
send the target path switching information to the first terminal.

56. The communication path switching apparatus according to claim 53, wherein the second obtaining module is specifically configured to:
send second path switching information to the first terminal; wherein the second path switching information comprises a trigger condition accepted by the second terminal for triggering switching between the first communication path and the second communication path; and
receive the target path switching information sent by the first terminal; wherein the target path switching information is information accepted by the first terminal from the second path switching information.

57. The communication path switching apparatus according to claim 52, wherein the target path switching information further comprises at least one of the following information:
a first path switching indication, used for indicating to perform switching between the first communication path and the second communication path for at least one of all services, all sessions, and all quality of service QoS flows on a current communication path between the first terminal and the second terminal in a case that the trigger condition is met;
a second path switching indication, comprising a first service type and/or a first session type and used for indicating to perform switching between the first communication path and the second communication path for a service corresponding to the first service type and/or a session corresponding to the first session type on the current communication path, or for all services and/or all sessions on the current communication path in a case that the trigger condition is met;
a third path switching indication, comprising a first service identifier and/or a first session identifier and used for indicating to perform switching between the first communication path and the second communication path for a service corresponding to the first service identifier and/or a session corresponding to the first session identifier on the current communication path, or for all services and/or all sessions on the current communication path in a case that the trigger condition is met;
a fourth path switching indication, comprising a first QoS flow identifier and used for indicating to perform switching between the first communication path and the second communication path for a QoS flow corresponding to the first QoS flow identifier on the current communication path, or for all services and/or all sessions on the current communication path in a case that the trigger condition is met; and
a path switching direction, used for indicating a switching direction of a communication path.

58. The communication path switching apparatus according to claim 57, wherein the trigger condition comprises at least one of the following information:
a first QoS threshold and/or first communication interruption information, wherein the first QoS threshold and the first communication interruption information are associated with the current communication path between the first terminal and the second terminal, and the first QoS threshold is a threshold of a QoS parameter for the current communication path;
a second QoS threshold and/or second communication interruption information, wherein the second QoS threshold and the second communication interruption information are associated with the first service type and/or the first session type, and the second QoS threshold is a threshold of a QoS parameter for the service corresponding to the first service type and/or the session corresponding to the first session type on the current communication path;
a third QoS threshold and/or third communication interruption information, wherein the third QoS threshold and the third communication interruption information are associated with the first service identifier and/or the first session identifier, and the third QoS threshold is a threshold of a QoS parameter for the service corresponding to the first service identifier and/or the session corresponding to the first session identifier on the current communication path;
a fourth QoS threshold and/or fourth communication interruption information, wherein the fourth QoS threshold and the fourth communication interruption information are associated with the first QoS flow identifier, and the fourth QoS threshold is a threshold of a QoS parameter for the QoS flow corresponding to the first QoS flow identifier on the current communication path; and
a fifth QoS threshold and a reference signal received power RSRP threshold, wherein the current communication path is the first communication path, the fifth QoS threshold is a threshold of a QoS parameter for the first communication path, and the RSRP threshold is a threshold of an RSRP for the second communication path.

59. The communication path switching apparatus according to claim 52, wherein the apparatus further comprises:
a third receiving module, configured to receive first path switching cancellation information sent by the first terminal; wherein the first path switching cancellation information is used to indicate the second terminal to skip switching between the first communication path and the second communication path;
a second execution cancellation module, configured to skip switching between the first communication path and the second communication path based on the first path switching cancellation information; and
a fifth transmission module, configured to send first path switching cancellation reply information to the first terminal.

60. The communication path switching apparatus according to claim 59, wherein the first path switching cancellation information comprises at least one of the following cause values:
congestion control information, mobility restriction information, and not being within a cellular signal coverage.

61. The communication path switching apparatus according to claim 59, wherein the first path switching cancellation information comprises:
trigger condition deactivation information, used for indicating the second terminal to deactivate the trigger condition; or
path switching termination information, used for indicating the second terminal to terminate switching between the first communication path and the second communication path.

62. The communication path switching apparatus according to claim 61, wherein the second execution cancellation module is specifically configured to:
delete the target path switching information in a case that the first path switching cancellation information comprises the path switching termination information.

63. The communication path switching apparatus according to claim 61, wherein the second execution cancellation module is specifically configured to:
deactivate the trigger condition in a case that the first path switching cancellation information comprises the trigger condition deactivation information.

64. The communication path switching apparatus according to claim 63, further comprising:
a fourth receiving module, configured to receive first trigger condition activation information sent by the first terminal; wherein the first trigger condition activation information is used to indicate the second terminal to activate the trigger condition; and
a first activation module, configured to activate the trigger condition based on the first trigger condition activation information.

65. The communication path switching apparatus according to claim 53, further comprising:
a fifth receiving module, configured to receive second trigger condition activation information sent by the first terminal; wherein the second trigger condition activation information is used to indicate the second terminal to activate the trigger condition; and
a second activation module, configured to activate the trigger condition based on the second trigger condition activation information.

66. The communication path switching apparatus according to claim 52, wherein the apparatus further comprises:
a sixth transmission module, configured to send second path switching cancellation information to the first terminal in a case that switching between the first communication path and the second communication path is unable to be performed; wherein the second path switching cancellation information is used to indicate the first terminal to skip switching between the first communication path and the second communication path; and
a sixth receiving module, configured to receive second path switching cancellation reply information sent by the first terminal.

67. The communication path switching apparatus according to claim 52, wherein the second switching module is specifically configured to:
perform switching from the first communication path to the second communication path based on the target path switching information in a case that a current communication path between the first terminal and the second terminal is the first communication path; or
perform switching from the second communication path to the first communication path based on the target path switching information in a case that the current communication path is the second communication path.

68. The communication path switching apparatus according to claim 58, wherein the second switching module is specifically configured to perform at least one of the following:
in a case that the target path switching information comprises the first path switching indication, the first QoS threshold, and/or the first communication interruption information, performing switching between the first communication path and the second communication path for at least one of all services, all sessions, and all QoS flows on the current communication path in a case that the current communication path is interrupted or a QoS parameter achievable or satisfiable on the current communication path does not meet the first QoS threshold;
in a case that the target path switching information comprises the second path switching indication, the second QoS threshold, and/or the second communication interruption information, performing switching between the first communication path and the second communication path for the service corresponding to the first service type and/or the session corresponding to the first session type on the current communication path in a case that the current communication path is interrupted or a QoS parameter achievable or satisfiable on the current communication path for the service corresponding to the first service type and/or the session corresponding to the first session type does not meet the second QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service type and/or the session corresponding to the first session type does not meet the second QoS threshold;
in a case that the target path switching information comprises the third path switching indication, the third QoS threshold, and/or the third communication interruption information, performing switching between the first communication path and the second communication path for the service corresponding to the first service identifier and/or the session corresponding to the first session identifier on the current communication path in a case that the current communication path is interrupted or a QoS parameter achievable or satisfiable on the current communication path for the service corresponding to the first service identifier and/or the session corresponding to the first session identifier does not meet the third QoS threshold; or performing switching between the first communication path and the second communication path for all the services and/or all the sessions on the current communication path in a case that the current communication path is interrupted or a QoS parameter achievable or satisfiable on the current communication path for the service corresponding to the first service identifier and/or the session corresponding to the first session identifier does not meet the third QoS threshold;
in a case that the target path switching information comprises the fourth path switching indication, the fourth QoS threshold, and/or the fourth communication interruption information, performing switching between the first communication path and the second communication path for the QoS flow corresponding to the first QoS flow identifier on the current communication path in a case that the current communication path is interrupted or a QoS parameter achievable or satisfiable on the current communication path for the QoS flow corresponding to the first QoS flow identifier does not meet the fourth QoS threshold; or performing switching between the first communication path and the second communication path for all the services and/or all the sessions on the current communication path in a case that the current communication path is interrupted or a QoS parameter achievable or satisfiable on the current communication path for the QoS flow corresponding to the first QoS flow identifier does not meet the fourth QoS threshold; and
in a case that the target path switching information comprises the fifth QoS threshold and the RSRP threshold, performing switching from the first communication path to the second communication path in a case that the current communication path is interrupted or that the current communication path is the first communication path, a QoS parameter achievable or satisfiable on the first communication path does not meet the fifth QoS threshold, and an RSRP on the second communication path is greater than the RSRP threshold.

69. A first terminal, comprising a processor, a memory, and a program or instructions stored in the memory and executable on the processor, wherein when the program or the instructions are executed by the processor, the steps of the communication path switching method according to any one of claims 1 to 17 are implemented.

70. A second terminal, comprising a processor, a memory, and a program or instructions stored in the memory and executable on the processor, wherein when the program or the instructions are executed by the processor, the steps of the communication path switching method according to any one of claims 18 to 34 are implemented.

71. A readable storage medium, wherein a program or instructions are stored in the readable storage medium, and when the program or instructions are executed by a processor of a first terminal, the communication path switching method according to any one of claims 1 to 17 is implemented, or when the program or instructions are executed by a processor of a second terminal, the steps of the communication path switching method according to any one of claims 18 to 34 are implemented.

72. A chip, wherein the chip comprises a processor and a communication interface, wherein the communication interface is coupled to the processor, and the processor is configured to execute a program or instructions to implement the communication path switching method according to any one of claims 1 to 17 or the steps of the communication path switching method according to any one of claims 18 to 34.

73. A computer program product, wherein the computer program product is stored in a non-transitory storage medium, and the computer program product is executed by a processor of a first terminal to implement the communication path switching method according to any one of claims 1 to 17, or is executed by a processor of a second terminal to implement the steps of the communication path switching method according to any one of claims 18 to 34.
